# EUROPÄISCHE PATENTSCHRIFT

(11) **EP 3 395 590 B1**
(45) Veröffentlichungstag und Bekanntmachung des Hinweises auf die Patenterteilung: **30.09.2020**
(21) Anmeldenummer: 18155018.7
(22) Anmeldetag: 05.02.2018
(51) Int. Cl.: B60C 15/06, B60C 9/00

(54) **FAHRZEUGLUFTREIFEN**
PNEUMATIC TYRES FOR A VEHICLE
PNEUMATIQUE DE VÉHICULE

(30) Priorität: 28.04.2017 DE 102017207216
(43) Veröffentlichungstag der Anmeldung: 31.10.2018
(73) Patentinhaber: Continental Reifen Deutschland GmbH, 30165 Hannover (DE)
(72) Erfinder: Chaturvedi, Bhaskar, 30165 Hannover (DE); van der Steen, René, 30161 Hannover (DE); Holste, Werner, 30539 Hannover (DE); Bakker, Tom, 30451 Hannover (DE)
(74) Vertreter: Finger, Karsten

(56) Entgegenhaltungen:
- EP-A1- 2 740 615
- US-A- 5 379 819
- US-A1- 2008 149 249
- US-B1- 6 527 025

## Beschreibung

Die Erfindung betrifft einen Fahrzeugluftreifen mit einer Radialkarkasse und zwei Wulstbereichen, wobei jeder Wulstbereich einen Wulstkern und einen dem Wulstkern aufsitzenden Wulstkernreiter aufweist, wobei die Karkasse von axial innen nach axial außen um die Wulstkerne und die Wulstkernreiter herum geführt und als Karkasshochschlag auf die Karkasse rück geführt ist und wobei in jedem Wulstbereich ein einziger, in Umfangsrichtung umlaufender, einlagiger und mit Festigkeitsträgern verstärkter Wulstverstärker mit einem oberen Bereich und einem gegenüber dem oberen Bereich näher zum jeweiligen Wulstkern befindlichen unteren Bereich angeordnet ist,
wobei der Wulstverstärker in seinem oberen Bereich zwischen der Karkasse und dem auf die Karkasse rückgeführten Karkasshochschlag endet, derart, dass der Wulstverstärker sowohl unmittelbar an die Karkasse als auch unmittelbar an den Karkasshochschlag angrenzt und wobei die Festigkeitsträger des Wulstverstärkers einen Winkel α mit der Umfangsrichtung einschließen, welcher in einem Bereich von 30° bis 70° liegt.

Ein Wulstverstärker ist eine Kautschuklage, welche parallel zueinander und voneinander beanstandete Festigkeitsträger aufweist und welcher kreisringförmig im Bereich des Wulstes den Reifen umläuft.

Ein Fahrzeugluftreifen eingangs genannter Art ist beispielsweise aus der US 6 527 025 B1 bekannt. Der Fahrzeugluftreifen weist in jedem Wulstbereich einen Wulstverstärker auf, dessen Festigkeitsträger beispielsweise Stahlkorde oder hochmodulige Textilkorde sind, die relativ zur Umfangsrichtung unter einem Winkel von 10° bis 60°, insbesondere von bis zu 30°, verlaufen. Jeder Wulstverstärker verläuft in seinem unteren Bereich axial außenseitig des Wulstkernreiters.

Aus der US 5 379 819 A ist ein Fahrzeugluftreifen bekannt, welcher in jedem seiner Wulstbereiche einen axial inneren und einen axial äußeren, hochmodulige Korde enthaltenden Wulstverstärker aufweist. Der axial innere Wulstverstärker ist einlagig ausgeführt und ist an der Innenseite der Karkasse zwischen dieser und der Innenschicht angeordnet. Die Korde des axial inneren Wulstverstärkers verlaufen relativ zur Reifenachse unter einem Winkel von 15° bis 50°. Der axial äußere Wulstverstärker ist zweilagig ausgeführt, wobei die in jeder Lage enthaltenen Korde unter einem Winkel von 30° bis 60° zur Umfangsrichtung verlaufen.

Ferner ist aus der EP 2 740 615 A1 ein Fahrzeugluftreifen mit je einem Wulstverstärker in den Wulstbereichen bekannt, welcher axial außen in Bezug auf den Karkasshochschlag angeordnet ist und der Versteifung des Wulstbereiches dient. Die Festigkeitsträger des Wulstverstärkers schließen einen Winkel von 24° bis 45° mit der Umfangsrichtung ein, wodurch mit den Festigkeitsträgern des Karkasshochschlages ein Kreuzverband gebildet ist, wodurch Schubverformungen der Seitenwand reduziert werden. Dieses wirkt sich positiv auf das Handling des Fahrzeugluftreifens aus.

Aus der US 2008/0149249 A1 ist ein weiterer Fahrzeugluftreifen bekannt, welcher gemäß einer Variante in seinen Wulstbereichen jeweils einen Wulstverstärker aufweist. Der obere Bereich jedes Wulstverstärkers endet radial innerhalb der radial inneren Gürtellage, der untere Bereich endet axial innenseitig des jeweiligen Wulstkerns.

Man ist ständig bemüht, die Schräglaufsteifigkeit von Fahrzeugluftreifen zu verbessern und die Einlauflänge zu verringern, ohne dessen übrigen Eigenschaften nachteilig zu beeinflussen. Diese beiden vorgenannten Eigenschaften verbessern bei bestimmten Fahrzeugen das Handling.

Es ist daher die Aufgabe der Erfindung, einen Fahrzeugluftreifen zur Verfügung zu stellen, der eine verbesserte Schräglaufsteifigkeit und eine verringerte Einlauflänge bei gleichem oder verbessertem Rollwiderstand aufweist.

Die Aufgabe wird gelöst, indem
der Wulstverstärker in seinem unteren Bereich axial innenseitig des jeweiligen Wulstkernreiters sowie zwischen dem Wulstkernreiter und der Karkasse verläuft.

Erfindungswesentlich ist, dass der Wulstverstärker zwischen der Karkasse und dem Karkasshochschlag angeordnet ist und somit eine gleichzeitige Kopplung an die Karkasse und an den Karkasshochschlag ausgebildet ist. Die Festigkeitsträger des Wulstverstärkers schließen einen Winkel α von 30° bis 70° mit der Umfangsrichtung ein, so dass ein Kreuzverband sowohl zwischen Karkasse und Wulstverstärker als auch zwischen Wulstverstärker und Karkasshochschlag gebildet ist. Durch diese zweifache Kopplung ist eine enorme Verstärkung und Versteifung des Wulstbereiches bis in die Seitenwand hinein erreicht, was sich positiv auf die Schräglaufsteifigkeit des Fahrzeugluftreifens und die Einlauflänge auswirkt. Die Schubverformungen in der Seitenwand sind reduziert. Durch beides wird ein bei bestimmten Fahrzeugen ein Handlingvorteil ohne Nachteil im Rollwiderstand erreicht. Die Länge des Karkasshochschlages oberhalb des Apex beträgt mindestens 5mm und reicht in einer bestimmten Ausführung bis unter die Gürtelkante. Die Kopplung von Karkasse, Wulstverstärker und Karkasshochschlag erfolgt mindestens über eine Länge von 20 mm.

Vorteilhaft ist es, wenn das am oberen Bereich liegende Ende des Wulstverstärkers auf Höhe des Karkasshochschlages liegt und wenigstens einen Abstand zum Karkasshochschlagende von 7 - 10 mm aufweist. Durch die Anordnung des Wulstverstärkers zwischen der Karkasse und dem Karkasshochschlag ist die Verwindungssteifigkeit erhöht, wodurch die Seitenwand steifer ist, was sich vorteilhaft auf die Schräglaufsteifigkeit auswirkt. Der Abstand des oberen Endes des Wulstverstärkers von 7 - 10mm zum Karkasshochschlagende mindert Steifigkeitssprünge.

Zweckmäßig ist es, wenn das am unteren Bereich liegende Ende des Wulstverstärkers auf Höhe der unteren Hälfte des Wulstkernreiters liegt, jedoch wenigstens einen Abstand zur Oberkante des Wulstkernes von 7 - 10 mm aufweist. Hierdurch ist der Wulstkernreiter zuverlässig über seine gesamte Höhe von dem Wulstverstärker bedeckt und ist während des Reifenherstellungsprozesses in seiner Lage fixiert. Den Wulstverstärker zusätzlich bis unter den Wulstkern zu führen ist nicht effektiv, denn der Wulstkern bringt bereits eine hohe Steifigkeit mit sich und somit können die Materialkosten für einen längeren Wulstverstärker eingespart werden.

Vorteilhaft ist es, wenn der Wulstkernreiter eine Höhe ≤ 20 mm, vorzugsweise eine Höhe ≤ 15 mm aufweist, gemessen durch eine Senkrechte, welche auf der zwischen dem Wulstkernreiter und dem Wulstkern befindlichen Oberkante des Wulstkernes aufsteht und bis zur Spitze des Wulstkernreiters reicht. Der Wulstkernreiter ist vergleichsweise niedrig, wodurch an Gewicht des Reifens eingespart ist, was sich vorteilhaft auf den Rollwiderstand auswirkt. Zudem verbleibt eine vergleichsweise große Länge, über welche der Wulstverstärker mit der Karkasse und gleichzeitig mit dem Karkasshochschlag koppelt, welches für das die Schräglaufsteifigkeit vorteilhaft ist.

Zweckmäßig ist es, wenn die Festigkeitsträger des Wulstverstärkers Monofilamente aus Stahl sind, welche einen Durchmesser von 0,25 - 0,40 mm aufweisen. Stahl weist eine höhere Steifigkeit als Text auf.

Alternativ sind die Festigkeitsträger des Wulstverstärkers textile Korde vorzugsweise aus Nylon oder Aramid. Textilkorde sind weniger steif als Festigkeitsträger aus Stahl, textile Festigkeitsträger können jedoch einfacher verarbeitet werden, da diese flexibler sind. Bei Verwendung von textilen Korden wird die Schichtenfolge Karkasse, Wulstverstärker, Karkasshochschlag dicker. Hierdurch ist die Seitenwand vorteilhaft versteift, wodurch die Schräglaufsteifigkeit von Fahrzeugluftreifen verbessert und die Einlauflänge verringert ist.

Vorteilhaft ist es, wenn die Festigkeitsträger des Wulstverstärkers einen Winkel α mit der Umfangsrichtung einschließen, welcher in einem Bereich von 30° bis 54° liegt. Eine Anordnung der Festigkeitsträger mit einem Winkel α im Bereich von 50° bis 54° liefert die besten Ergebnisse hinsichtlich der Schräglaufsteifigkeit und verringerter Einlauflänge.

Der Fahrzeugluftreifen ist vorzugsweise ein PKW- oder Light Truck-Reifen.

Weitere Merkmale, Vorteile und Einzelheiten der Erfindung werden nun anhand einer Zeichnung, die ein schematisches Ausführungsbeispiel darstellt, näher beschrieben.

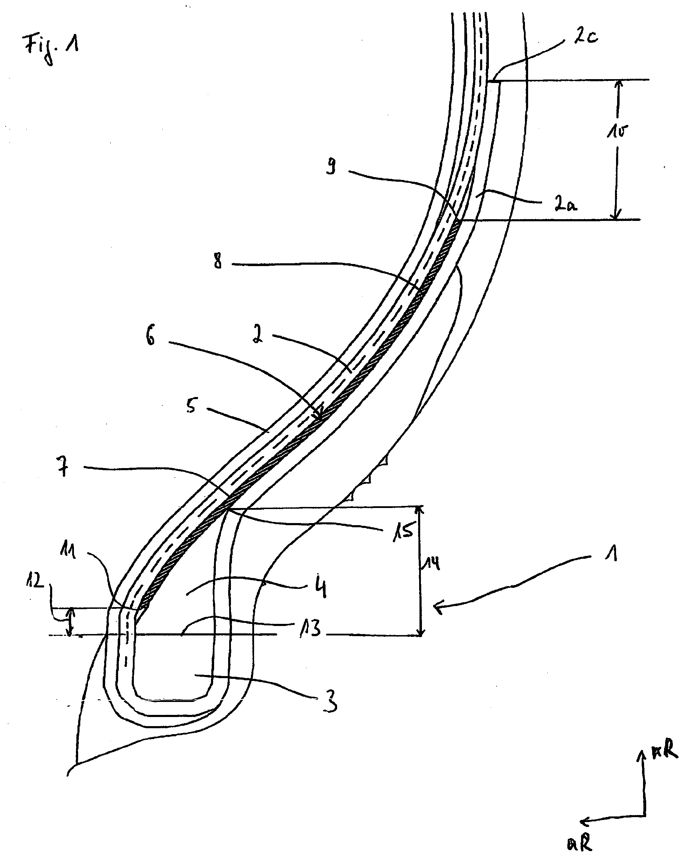

Die Fig. 1 zeigt einen Querschnitt durch den Wulstbereich 1 eines Fahrzeugluftreifens, hier eines PKW-Reifens radialer Bauart. Der PKW-Reifen weist eine übliche Standardkonstruktion auf, mit zwei Seitenwänden, einem Kronenbereich, mit einer Karkasse 2, welche um die Wulstkerne 3 und um die den Wulstkernen 3 aufsitzenden Wulstkernreiter 4 herum geführt und als Karkasshochschlag 2a auf die Karkasse 2 rück geführt ist, mit einer luftdicht ausgeführten Innenschicht 5, einem mehrlagigen Gürtel und einem Laufstreifen. Im Wulstbereich 1 ist ein einlagiger Wulstverstärker 6 angeordnet, welcher zwischen der Karkasse 2 und dem auf die Karkasse 2 rückgeführten Karkasshochschlag 2a angeordnet ist. Hierdurch grenzt der Wulstverstärker 6 sowohl unmittelbar an die Karkasse 2 als auch unmittelbar an den Karkasshochschlag 2a an. Die Festigkeitsträger des Wulstverstärkers 6 schließen mit der Umfangsrichtung einen Winkel α von 43° bis 46° ein. Der Wulstverstärker 6 ist in seinem unteren Bereich 7 zwischen dem Wulstkernreiter 4 und der Karkasse 2 und in seinem oberen Bereich 8 zwischen Karkasse 2 und Karkasshochschlag 2a angeordnet. Das obere Ende 9 des Wulstverstärkers 6 liegt auf Höhe des Karkasshochschlages 2a, wodurch das obere Ende 9 innerhalb der Erstreckung des Karkasshochschlages 2a liegt und wenigstens einen Abstand 10 zum Karkasshochschlagende 2c von 7 - 10 mm aufweist. Das untere Ende 11 des Wulstverstärkers liegt auf Höhe der unteren Hälfte des Wulstkernreiters 4, weist jedoch wenigstens einen Abstand 12 zur Oberkante des Wulstkernes 13 von 7 - 10 mm auf.

Der Wulstkernreiter 4 weist eine Höhe 14 von 15 mm auf, gemessen durch eine Senkrechte, welche auf der oberen Kante 13 des Wulstkernes aufsteht, von dieser oberen Kante 13 des Wulstkernes 3 bis zur Spitze 15 des Wulstkernreiters 4. Die Festigkeitsträger des Wulstverstärkers 6 sind Monofilamente aus Stahl, welche einen Durchmesser von 0,35 mm aufweisen.

### Bezugszeichenliste

- 1: Wulstbereich
- 2: Karkasse
- 2a: Karkasshochschlag
- 2c: Karkasshochschlagende
- 3: Wulstkern
- 4: Wulstkernreiter
- 5: Innenschicht
- 6: Wulstverstärker
- 7: Unterer Bereich des Wulstverstärkers
- 8: Oberer Bereich des Wulstverstärkers
- 9: Oberes Ende des Wulstverstärkers
- 10: Abstand
- 11: Unteres Ende des Wulstverstärkers
- 12: Abstand
- 13: Oberkante des Wulstkerns
- 14: Höhe des Wulstkernreiters
- 15: Spitze des Wulstkernreiters

- rR: radiale Richtung
- aR: axiale Richtung

## Patentansprüche

1. Fahrzeugluftreifen mit einer Radialkarkasse (2) und zwei Wulstbereichen (1), wobei jeder Wulstbereich (1) einen Wulstkern (3) und einen dem Wulstkern (3) aufsitzenden Wulstkernreiter (4) aufweist, wobei die Karkasse (2) von axial innen nach axial außen um die Wulstkerne (3) und die Wulstkernreiter (4) herum geführt und als Karkasshochschlag (2a) auf die Karkasse (2) rück geführt ist und wobei in jedem Wulstbereich (1) ein einziger, in Umfangsrichtung umlaufender, einlagiger und mit Festigkeitsträgern verstärkter Wulstverstärker (6) mit einem oberen Bereich (8) und einem gegenüber dem oberen Bereich (8) näher zum jeweiligen Wulstkern (3) befindlichen unteren Bereich (7) angeordnet ist,
wobei der Wulstverstärker (6) in seinem oberen Bereich (8) zwischen der Karkasse (2) und dem auf die Karkasse (2) rückgeführten Karkasshochschlag (2a) endet, derart, dass der Wulstverstärker (6) sowohl unmittelbar an die Karkasse (2) als auch unmittelbar an den Karkasshochschlag (2a) angrenzt und wobei die Festigkeitsträger des Wulstverstärkers (6) einen Winkel α mit der Umfangsrichtung einschließen, welcher in einem Bereich von 30° bis 70° liegt,
**dadurch gekennzeichnet,**
**dass** der Wulstverstärker (6) in seinem unteren Bereich (7) axial innenseitig des jeweiligen Wulstkernreiters (4) sowie zwischen dem Wulstkernreiter (4) und der Karkasse (2) verläuft.

2. Fahrzeugluftreifen nach Anspruch 1, **dadurch gekennzeichnet, dass** das am oberen Bereich (8) liegende Ende des Wulstverstärkers (9) auf Höhe des Karkasshochschlages (2a) liegt und wenigstens einen Abstand (10) zum Karkasshochschlagende (2c) von 7 - 10 mm aufweist, gemessen in radialer Richtung.

3. Fahrzeugluftreifen nach Anspruch 2, **dadurch gekennzeichnet, dass** das am unteren Bereich (7) liegende Ende des Wulstverstärkers (11) auf Höhe der unteren Hälfte des Wulstkernreiters (4) liegt, jedoch wenigstens einen Abstand (12) zur Oberkante des Wulstkernes (13) von 7 - 10 mm aufweist, gemessen in radialer Richtung.

4. Fahrzeugluftreifen nach einem oder mehreren der vorangehenden Ansprüche, **dadurch gekennzeichnet, dass** der Wulstkernreiter (4) eine Höhe (14) ≤ 20 mm, vorzugsweise eine Höhe (14) ≤ 15 mm, aufweist, gemessen durch eine Senkrechte, welche auf der zwischen dem Wulstkernreiter (4) und dem Wulstkern (3) befindlichen Oberkante des Wulstkernes (13) aufsteht und bis zur Spitze des Wulstkernreiters (15) reicht.

5. Fahrzeugluftreifen nach einem oder mehreren der vorangehenden Ansprüche, **dadurch gekennzeichnet, dass** die Festigkeitsträger des Wulstverstärkers (6) Monofilamente aus Stahl sind, welche einen Durchmesser von 0,25 - 0,40 mm aufweisen.

6. Fahrzeugluftreifen nach einem oder mehreren der vorangehenden Ansprüche 1 - 4, **dadurch gekennzeichnet, dass** die Festigkeitsträger des Wulstverstärkers (6) textile Korde vorzugsweise aus Nylon oder Aramid sind.

7. Fahrzeugluftreifen nach einem oder mehreren der vorangehenden Ansprüche, **dadurch gekennzeichnet, dass** die Festigkeitsträger des Wulstverstärkers (6) einen Winkel α mit der Umfangsrichtung einschließen, welcher in einem Bereich von 30° bis 54° liegt.

## Claims

1. Pneumatic vehicle tyre with a radial carcass (2) and two bead regions (1), wherein each bead region (1) has a bead core (3) and a bead filler (4) resting on the bead core (3), wherein the carcass (2) is led around the bead cores (3) and the bead fillers (4) from axially the inside to axially the outside and is led back to the carcass (2) as a carcass turn-up (2a) and wherein in each bead region (1) there is arranged a single bead reinforcer (6), which runs around in the circumferential direction, comprises a single ply and is reinforced with reinforcing elements, comprising an upper region (8) and a lower region (7), which is closer to the respective bead core (3) than the upper region (8),
wherein the bead reinforcer (6) ends in its upper region (8) between the carcass (2) and the carcass turn-up (2a) led back to the carcass (2) in such a way,
that the bead reinforcer (6) both directly adjoins the carcass (2) and directly adjoins the carcass turn-up (2a) and wherein the reinforcing elements of the bead reinforcer (6) form with the circumferential direction an angle α, which lies in a range from 30° to 70°,
**characterized**
**in that** the bead reinforcer (6) runs in its lower region (7) on the inside axially of the respective bead filler (4) and between the bead filler (4) and the carcass (2).

2. Pneumatic vehicle tyre according to Claim 1,
**characterized in that** the end of the bead reinforcer (9) lying at the upper region (8) lies at the height of the carcass turn-up (2a) and is at least at a distance (10) from the end (2c) of the carcass turn-up of 7-10 mm, measured in the radial direction.

3. Pneumatic vehicle tyre according to Claim 2,
**characterized in that** the end of the bead reinforcer (11) lying at the lower end (7) lies at the height of the lower half of the bead filler (4), but is at least at a distance (12) from the upper edge of the bead core (13) of 7-10 mm, measured in the radial direction.

4. Pneumatic vehicle tyre according to one or more of the preceding claims, **characterized in that** the bead filler (4) has a height (14) of ≤ 20 mm, preferably a height (14) of ≤ 15 mm, measured by a perpendicular that extends from the upper edge of the bead core (13) located between the bead filler (4) and the bead core (3) and reaches up to the tip of the bead filler (15) .

5. Pneumatic vehicle tyre according to one or more of the preceding claims, **characterized in that** the reinforcing elements of the bead reinforcer (6) are monofilaments of steel, which have a diameter of 0.25-0.40 mm.

6. Pneumatic vehicle tyre according to one or more of the preceding Claims 1-4, **characterized in that** the reinforcing elements of the bead reinforcer (6) are textile cords, preferably made of nylon or aramid.

7. Pneumatic vehicle tyre according to one or more of the preceding claims, **characterized in that** the reinforcing elements of the bead reinforcer (6) form with the circumferential direction an angle α, which lies in a range from 30° to 54°.

## Revendications

1. Pneumatique de véhicule comprenant une carcasse radiale (2) et deux régions de talon (1), chaque région de talon (1) présentant une tringle (3) et un bourrage de tringle (4) reposant sur la tringle (3), la carcasse (2) étant guidée axialement de l'intérieur vers l'extérieur autour de la tringle (3) et du bourrage de tringle (4) et étant ramenée sur la carcasse (2) sous forme de revers de carcasse (2a) et un renfort de talon (6) unique, monocouche, s'étendant sur le pourtour dans la direction périphérique et renforcé par des renforts, avec une région supérieure (8) et une région inférieure (7) située plus près de la tringle respective (3) que la région supérieure (8), étant disposé dans chaque région de talon (1),
le renfort de talon (6) se terminant dans sa région supérieure (8) entre la carcasse (2) et le revers de carcasse (2a) ramené sur la carcasse (2) de telle sorte que le renfort de talon (6) est directement adjacent à la fois à la carcasse (2) et au revers de carcasse (2a) et les renforts du renfort de talon (6) formant avec la direction périphérique un angle α qui est situé dans une plage de 30° à 70°,
**caractérisé en ce que**
le renfort de talon (6) s'étend dans sa région inférieure (7) axialement du côté intérieur du bourrage de tringle (4) respectif ainsi qu'entre le bourrage de tringle (4) et la carcasse (2).

2. Pneumatique de véhicule selon la revendication 1,
**caractérisé en ce que** l'extrémité du renfort de talon (9) située au niveau de la région supérieure (8) est située à la hauteur du revers de carcasse (2a) et est à au moins une distance (10) de 7 à 10 mm, mesurée dans la direction radiale, de l'extrémité du revers de carcasse (2c).

3. Pneumatique de véhicule selon la revendication 2,
**caractérisé en ce que** l'extrémité du renfort de talon (11) située au niveau de la région inférieure (7) est située à la hauteur de la moitié inférieure du bourrage de tringle (4) mais est à au moins une distance (12) de 7 à 10 mm, mesurée dans la direction radiale, de l'arête supérieure de la tringle (13).

4. Pneumatique de véhicule selon l'une quelconque ou plusieurs des revendications précédentes,
**caractérisé en ce que** le bourrage de tringle (4) présente une hauteur (14) ≤ 20 mm, de préférence une hauteur (14) ≤ 15 mm, mesurée via une verticale qui se dresse sur l'arête supérieure de la tringle (13), se trouvant entre le bourrage de tringle (4) et la tringle (3), et qui s'étend jusqu'à la pointe du bourrage de tringle (15).

5. Pneumatique de véhicule selon l'une quelconque ou plusieurs des revendications précédentes,
**caractérisé en ce que** les renforts du renfort de talon (6) sont des monofilaments en acier qui présentent un diamètre de 0,25 à 0,40 mm.

6. Pneumatique de véhicule selon l'une quelconque ou plusieurs des revendications précédentes 1 à 4,
**caractérisé en ce que** les renforts du renfort de talon (6) sont des câbles textiles, de préférence en nylon ou en aramide.

7. Pneumatique de véhicule selon l'une quelconque ou plusieurs des revendications précédentes,
**caractérisé en ce que** les renforts du renfort de talon (6) forment un angle α compris dans une plage de 30° à 54° avec la direction périphérique.
